# EUROPÄISCHE PATENTSCHRIFT

(11) **EP 2 165 288 B1**
(45) Veröffentlichungstag und Bekanntmachung des Hinweises auf die Patenterteilung: **16.10.2013**
(21) Anmeldenummer: 08773864.7
(22) Anmeldetag: 03.07.2008
(51) Int. Cl.: G06K 13/08, G06K 7/00

(54) **LESEGERÄT FÜR EINE ELEKTRONISCHE SPEICHERKARTE, INSBESONDERE FÜR EINE MICROKARTE**
READING DEVICE FOR AN ELECTRONIC MEMORY CARD, ESPECIALLY A MICRO CARD
APPAREIL DE LECTURE DESTINÉ À UNE CARTE MÉMOIRE ÉLECTRONIQUE, EN PARTICULIER À UNE MICROCARTE

(30) Priorität: 04.07.2007 DE 102007031047
(43) Veröffentlichungstag der Anmeldung: 24.03.2010
(73) Patentinhaber: Amphenol-Tuchel Electronics GmbH, 74080 Heilbronnn (DE)
(72) Erfinder: BRAUN, Gerhard, 74626 Bitzfeld (DE)
(74) Vertreter: Wagner, Karl H.
(86) Internationale Anmeldenummer: PCT/EP2008/005462
(87) Internationale Veröffentlichungsnummer: WO 2009/003713

(56) Entgegenhaltungen:
- EP-A- 0 840 246
- EP-A- 1 111 721
- US-A1- 2003 119 364
- US-A1- 2007 117 463
- US-B1- 7 118 419

## Beschreibung

Die Erfindung bezieht sich auf ein Lese- bzw. Kontaktgerät für Microkarten z.B. für Micro SD Karten kurz gesagt bezieht sich die Erfindung auf einen Microkartenleser.

Im Stand der Technik sind bereits Kartenleser für größere Kartenformate mit metallischem Deckel bekannt, welcher schwenkbar an einem Kunststoffgrundträger gelagert ist.

Beispielsweise zeigt die Druckschrift DE 10238156 A1 einen Kartenleser mit metallischem Klappdeckel, welcher eine elektrisch leitfähige Verbindung zwischen dem am dielektrischen Kontaktträger angelenkten Deckel mit dem Massepotential der Schaltung vorsieht.

In der Druckschrift DE 10 2004 015 279 ist ein Kartenleser gezeigt, welcher einen metallischen Deckel aufweist, der elektrisch über Federkontakte mit der Kartenaufnahme bzw. mit dem Kontaktträger verbunden ist. In beiden Kartenlesevorrichtungen muss jedoch ein gesonderter Kontaktsatz vorgesehen werden, der einen elektrischen Kontakt zwischen einem Leiterkreis auf der Leiterplatte und dem metallischen Deckel herstellt. Wird zusätzlich die Funktion des Verschiebens des Deckels von einer Öffnungsposition in eine Schließposition benötigt, so stellt die EP 0 947 944 hierzu eine Lösung bereit. Bei diesem Kartenleser lässt sich der metallische Deckel bezüglich dem aus Isoliermaterial bestehenden Körper verschwenken und verschieben. Nach dem Verschieben des Deckels in die Schließposition wird der Deckel galvanisch mit einer Schaltung über ebenfalls gesondert angebrachte Kontaktsätze verbunden.

Nachteilig bei diesen Kartenlesern ist, dass solche Kartenleser relativ groß gebaut sind. Wird ein Kartenleser mit einer Gesamthöhe von kleiner 1 mm benötigt, so stellt die Abstimmung der Fertigungstoleranzen des Kunststoffkontaktträgers auf den Deckel und auf (zu) die Kontaktpositionen ein Problem dar. Ein zusätzliches Problem ist die mechanische Stabilität der Lager und Kontaktstellen.

Vorzugsweise soll der Deckel nicht unter federbelasteter Vorspannung stehen, wenn keine Karte in den Deckel eingesetzt ist.

Da ein Kartenleser einer Vielzahl von Öffnungs- und Schließvorgängen standhalten muss, tritt das Problem von Materialbruch auf und als weiteres Problem ein erheblichen Verschleiß und Abrieb der Kontaktoberfläche der Kontaktierzonen zum Erden des Deckels.

Diese Erfindung bezieht sich daher insbesondere auf einen Kartenleser (im Folgenden auch kurz: Leser) mit Microkarten.

Microkarten speziell Micro SD Karten besitzen sehr kleine Abmessungen in der Größenordnung von 11 mm x 15 mm x 0,7 mm und werden häufig in so-genannten Handys verwendet.

Die erfindungsgemäßen Merkmale des Microkartenle.sers können aber auch bei Lesegeräten für andere Abmessungen aufweisende elektronische Speicherkarten verwendet werden.

Zum Stand der Technik sei ferner noch auf die EP 1 111 721 A1 hingewiesen, die den Oberbegriff des Anspruchs 1 bildet. Dieses Dokument zeigt einen modular aufgebauten Mikrokartenleser, und zwar mit einem Grundkörper zur Aufnahme und Befestigung eines Kontaktelemente tragenden Kontaktblocks und mit einem am Grundkörper schwenkbar gelagerten Klapp/Schiebedeckel, der zur Aufnahme einer Mikrokarte dient.

Die US 7 118 419 B1 zeigt einen SIM Kartenleser bei dem in einem Grundkörper Kontakte angebracht sind, und in dem ein zwischen einer Klappposition und Leseposition verschiebbarer Deckel gelagert ist. Darüberhinaus zeigt die US 2007/0117463 A1 ähnlich wie auch die zuvor genannte Druckschrift einen Grundkörper mit daran verschiebbar angelegtem Deckel zur Aufnahme einer IC Karte.

Der vorliegenden Erfindung liegt die Aufgabe zugrunde bei einem Mikrokartenleser mit einem Grundkörper und daran schwenkbar gelagerten Deckel, der zwischen einer Klappposition und einer Leseposition bewegt werden kann, Vorkehrungen zu treffen, dass ein unbeabsichtiger Übergang von der einen Position zur anderen Position vermieden wird.

Erfindungsgemäß wird diese Aufgabe durch einen modular aufgebauten Mikrokartenleser gemäß Anspruch 1 gelöst.

Bevorzugte Ausgestaltungen der Erfindung ergeben sich aus den Unteransprüchen.

Die vorliegende Erfindung betrifft einen Microkartenleser, speziell einen Micro SD Leser, der die oben erwähnten Nachteile nicht zeigt und der leicht zu bedienen und leicht zu montieren ist, und einen sicheren Betrieb ermöglicht, wobei insbesondere eine gute elektrische Abschirmwirkung erreicht wird, wobei zum anderen insbesondere die Möglichkeit eröffnet werden soll durch Austausch einzelner Komponenten, insbesondere unterschiedlicher Kontaktblöcke, Kartenleser für unterschiedliche Anwendungszwecke vorzusehen.

Ferner ist vorgesehen die Lager mit ihren Lageröffnungen und Lagerpfosten so auszubilden, dass die, beim mechanischen Verschieben des Deckels vom Abrieb bzw. Verschleiß betroffenen Lagerbereiche; insbesondere im Bereich von Lauf- und Führungsflächen, zumindestens teilweise von dem eigentlichen Kontaktbereich der Deckellager beabstandet angeordnet sind.

Der erfindungsgemäße Microkartenleser, speziell der Micro SD Leser besitzt einen modularen Aufbau und verwendet einen vorbestückten Kontaktblock, der auch eigenständig die Microkarte, speziell die Micro SD Karte kontaktieren könnte.

Der erfindungsgemäße Microkartenleser weist einen vorzugsweise aus Metall bestehenden Kontaktblockaufnahmekörper bzw. Grundkörper auch als Rahmen bezeichnet auf, an dem ein vorzugsweise aus Metall bestehender Kartenaufnahmedeckel angelenkt ist. Grundkörper und Deckel bilden eine Karten- und Kontaktblockaufnahmevorrichtung auf die sich die Erfindung auch bezieht. Der Deckel ist vorzugsweise ein Klapp/Schiebedeckel der schwenkbar und verschiebbar am Grundkörper durch sogenannte Schwenk/Gleit-Lagermittel angeordnet ist. Ein Kontaktblock, der Kontaktelemente zur Kontaktierung der auf der Karte vorgesehenen Kontakte aufweist, ist im Grundkörper befestigt. Der Kontaktträger kann dabei als Deckelzentrierung beim Schließen dienen, indem vorzugsweise etwas nach innen gebogene Lagerarme des Deckels an den durch den Kontaktträger gebildeten seitlichen Führungsflächen entlanggleiten.

Der erfindungsgemäße insbesondere für Microkarten geeignete Leser wird in Einzelkomponenten aufgeteilt und besteht aus einem Rahmen, einem Kontaktblock und einem Deckel. Der Kartenleser hat eine geringe Bauhöhe und ist modular aufgebaut, so dass durch Austausch einzelner Komponenten unterschiedliche Varianten hergestellt werden können.

Der Rahmen hat eine Aussparung, in welche Kontaktblöcke mit unterschiedlicher Größe und variabler Kontaktbestückung eingesetzt werden können. Die Kontaktblöcke werden mit kleinen Flügeln befestigt, welche sich im Metallrahmen befinden und nach dem Einsetzen des Blocks umgebogen werden. Der Kontaktblock wird durch die Flügel in der Höhe fixiert, wodurch die Koplanarität zwischen Kontaktblock und Rahmen gewährleistet wird. Zwischen Kontaktblock und Metallrahmen befindet sich ein umlaufender schmaler Spalt dadurch werden Spannungen und ein Verzug durch unterschiedliche Wärmeausdehnung der Komponenten beim Weiterverarbeiten insbesondere beim Reflowlöten vermieden.

Der Klapp/Schiebedeckel ist mittels eines Scharniers mit dem Rahmen verbunden und besitzt im geschlossenen Zustand und bei eingesetzter Karte einen elektrischen Kontakt zu diesem, wodurch eine Abschirmung der Karte gewährleistet ist. Der Deckel kann optional mit einem Schaltarm ausgestattet werden, welcher im Zusammenhang mit Pads auf der Leiterplatte die Öffnungsbewegung des Deckels erfasst.

Sieken im Grundkörper sind vorgesehen um definierte Lötpunkte und ausreichende Koplanarität zu erzielen.

Ferner können zur Optimierung der Gleitflächen des Deckels und des Grundkörpers die Stanzkanten kalibriert bzw. gratfrei ausgebildet werden.

Die Ausführung der Unterhakungen bedeutet Fehl-Bediensicherheit bei eingesetzter Karte: Lage und Stabilität des Deckels in der Schließ- bzw. Lesestellung bleibt bei Druck von oben erhalten.

Die Verriegelung des Deckels am Grundkörper, d.h. die Scharnierfederverriegelung (die häufig seitlich erfolgt) ist in die "Fläche" gelegt. Dies erfolgt durch die von den flächenmäßig verteilten Kontaktfedern ausgeübten Kräfte, die sich zu einer Verriegelungskraft summieren. Dadurch kann einerseits eine zusätzliche Feder zum Erzeugen der Verriegelungskräfte entfallen und der Deckel bleibt bei nicht eingesetzter Karte entlastet. Bei eingesetzter Karte erzeugen die Lesekontakte 70 über die Kontaktierzone eine Kraft auf die Karte, die in der Fläche wirkt und den Deckel zur Verriegelung einerseits und zum Kontaktieren der Deckelscharniere mit dem Grundkörper andererseits betätigt. Somit werden von den Lesekontakten 70 drei Funktionen übernommen: Kartenkontakt, Verriegelungskräfte und Deckelkontaktierungskraft mit den Scharnieren.

Die Verriegelung und die Kartenführung sind in der Höhe und seitlich versetzt, was die Baugröße günstig beeinflusst. Der Deckel kann sich ohne Karte auf der Platine abstützen.

Der erfindungsgemäße Microkartenleser, der aus einem Grundkörper, einem daran angelenkten Deckel, sowie einem Kontaktblock besteht, ist ferner derart ausgebildet, dass dann, wenn der Deckel aus Metall oder aus metallisiertem Kunststoff und der Grundkörper ebenfalls aus Metall oder metallisiertem Kunststoff bestehen, eine ständige elektrische Abschirmung dadurch erreicht wird, dass die Schwenk/Gleit-Lagermittel derart ausgebildet sind, dass sowohl bei der Schwenkbewegung als auch bei der Gleit- oder Translationsbewegung stets Kontakt zu Erdpotential vorgesehen wird.

Erfindungsgemäß geschieht dies dadurch, dass die Schwenk/Gleit-Lagermittel vorzugsweise beidseitig an Deckel und Grundkörper jeweils Schwenk/Gleitlager (Scharniere) aufweisen, die insbesondere während der Gleit- oder Translationsbewegung elektrischen Erdkontakt vorsehen, und zwar insbesondere auch dann, wenn die Karte sich in ihrer Lesestellung befindet.

Weitere Vorteile, Ziele und Einzelheiten der Erfindung ergeben sich aus der Beschreibung eines Ausführungsbeispiels anhand der Zeichnung; in der Zeichnung zeigt:
- Fig. 1: eine perspektivische Draufsicht auf ein erstes Ausführungsbeispiel einer erfindungsgemäßen Karten- und Kontaktblockaufnahmevorrichtung;
- Fig. 2: eine Ansicht eines Details eines Schwenk/Gleitlagers der Fig. 3 aus einer etwas anderen Perspektive;
- Fig. 3: die erfindungsgemäße Karten- und Kontaktblockaufnahmevorrichtung gemäß Fig. 1, und zwar mit geöffnetem Deckel;
- Fig. 4: eine Draufsicht auf ein erstes Ausführungsbeispiel eines erfindungsgemäßen Microkartenlesers, bei dem ein Kontaktblock in die Karten-und Kontaktaufnahmevorrichtung (der Fig. 1) eingesetzt ist;
- Fig. 5: einen Schnitt längs Linie A-A in Fig. 4
- Fig. 6: eine vergrößerte Seitenansicht des einen Schwenk/Gleitlagers der Fig. 4;
- Fig. 7: eine Draufsicht auf den Microkartenleser gemäß Fig. 4 mit eingesetzter Karte, wobei aber der Klapp-/Schiebedeckel noch nicht in seine (ggf. der Leseposition der Karte entsprechende) Verriegelungsposition verschoben ist;
- Fig. 8: eine Schnittansicht längs Linie A-A in Figur 7.
- Fig. 9: eine perspektivische Ansicht des Microkartenlesers 1 gemäß Fig. 4, mit dem Deckel in einer sogenannten Zwischenstellung;
- Fig. 10: eine Seitenansicht des Microkartenlesers 1 der Fig. 9 in der Zwischenstellung;
- Fig. 11: eine vergrößerte Seitenansicht eines Microkartenlesers in dessen Lesestellung (gleichzeitig der Verriegelungsstellung des Deckels), d.h. dann wenn der die Karte aufnehmende Deckel aus der in Fig. 3 gezeigten Stellung, die in Fig. 8 gezeigte Stellung, verschwenkt und dann über die Zwischenstellung gemäß Fig. 9 und 10 in die Lesestellung gemäß Fig. 11 verschoben ist.
- Fig. 12: eine perspektivische Draufsicht auf ein zweites Ausführungsbeispiel eines erfindungsgemäßen Microkartenlesers bei dem, wie deutlicher in Figur 13 gezeigt, ein Kontaktblock in ein zweites Ausführungsbeispiel einer aus Grundkörper und Deckel bestehende Karten- und Kontaktblockaufnahmevorrichtung eingesetzt ist;
- Fig. 13: eine perspektivische Draufsicht auf den Microkartenleser der Figur 12 in seinem geöffneten Zustand;
- Fig. 14: eine Ansicht ähnlich wie in Fig. 13, wobei aber hier als einziger Unterschied gegenüber Figur 13 dargestellt ist, dass auch ein anders dimensionierter, in diesem Falle breiterer, Kontaktblock in den gleichen Grundkörper wie in Fig. 13 eingesetzt werden kann;
- Fig. 15: eine perspektivische Draufsicht auf den Grundkörper (Rahmen) des in Figur 13 gezeigten Microkartenlesers;
- Fig. 16: eine Vergrößerung des in Figur 15 mit einem Kreis markierten Bereichs.
- Fig. 17: eine Draufsicht auf den Grundkörper des zweiten Ausführungsbeispiels mit aufgesetztem, aber noch nicht am Grundkörper befestigten, Kontaktblock.
- Fig. 18: im Wesentlichen die in Figur 17 mit A bezeichnete Einzelheit;
- Fig. 19: eine Draufsicht, ähnlich wie Figur 17, wobei hier der Befestigungszustand des Kontaktblocks am Grundkörper dargestellt ist;
- Fig. 20: die in Figur 19 mit B bezeichnete eingekreiste Einzelheit;
- Fig. 21: eine perspektivische Draufsicht auf die Unterseite des Grundkörpers mit eingesetztem Kontaktträger;
- Fig. 22: eine in Figur 21 eingekreiste Einzelheit;

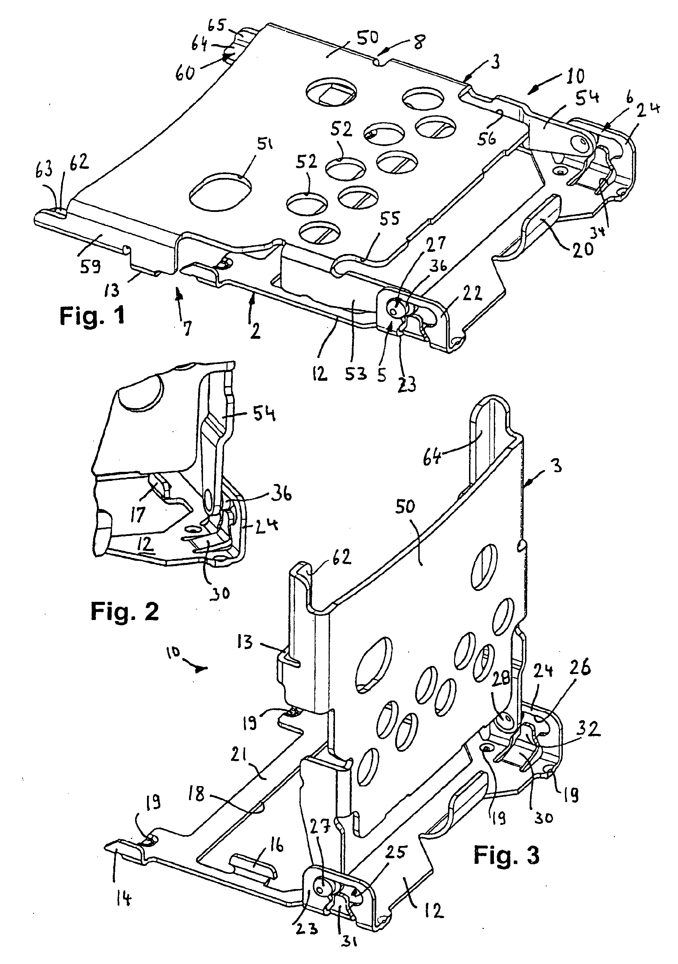

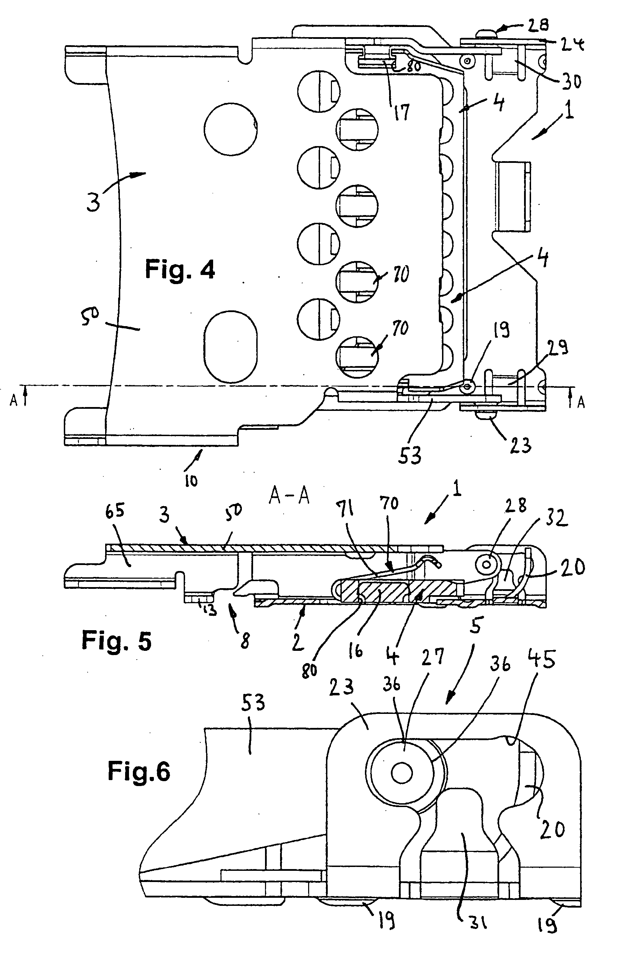

Ein erstes Ausführungsbeispiel eines erfindungsgemäßen Microkartenlesers 1, insbesondere eines Micro SD Kartenlesers ist in den Figuren 4 - 11 gezeigt, wobei wichtige Einzelheiten in den Fig. 1-3 dargestellt sind.

Wie in Fig. 4 gezeigt weist der Microkartenleser (kurz: Leser) 1 eine im Einzelnen in Fig. 1 gezeigte Karten- und Kontaktblockaufnahmevorrichtung 10, sowie ferner einen Kontaktblock (Isolierkörper) 4, in dem Kontaktelemente 70 befestigt sind. Die Kontaktelemente 70 bilden Kontaktfedern 71 (Figur 5). Die Karten- und Kontaktblockaufnahmevorrichtung 10 ihrerseits weist wie in Fig. 1 - 3 gezeigt, einen Kontaktblockaufnahmekörper bzw. Grundkörper (bzw. Rahmen) 2 sowie einen Klapp/Schiebedeckel 3 auf. Der Grundkörper 2 besteht vorzugsweise aus Metallblech. Der zur Aufnahme einer Microkarte 9 ausgebildete Deckel 3 besteht ebenfalls vorzugsweise aus Metallblech.

Der Deckel 3 ist durch Scharniermittel insbesondere Schwenk/Gleit-Lagermittel am Grundkörper 2 schwenk- bzw. klappbar und gleitbar gelagert. Die Schwenk/Gleit-Lagermittel umfassen wie beispielsweise in Fig. 1 gezeigt, beidseitig am Leser 1 angebracht, ein Schwenk/Gleit-Lager 5 und ein Schwenk-/Gleitlager 6.

Die in den Figuren 1 bis 3 gezeigte Karten- und Kontaktblockaufnahmevorrichtung 10 und insbesondere auch der Microkartenleser 1 gemäß den übrigen Figuren ist im großen und ganzen entsprechend dem Umriss einer Micro SD Karte gestaltet, die im Bereich der Kartenkontakte etwas schmäler ist.

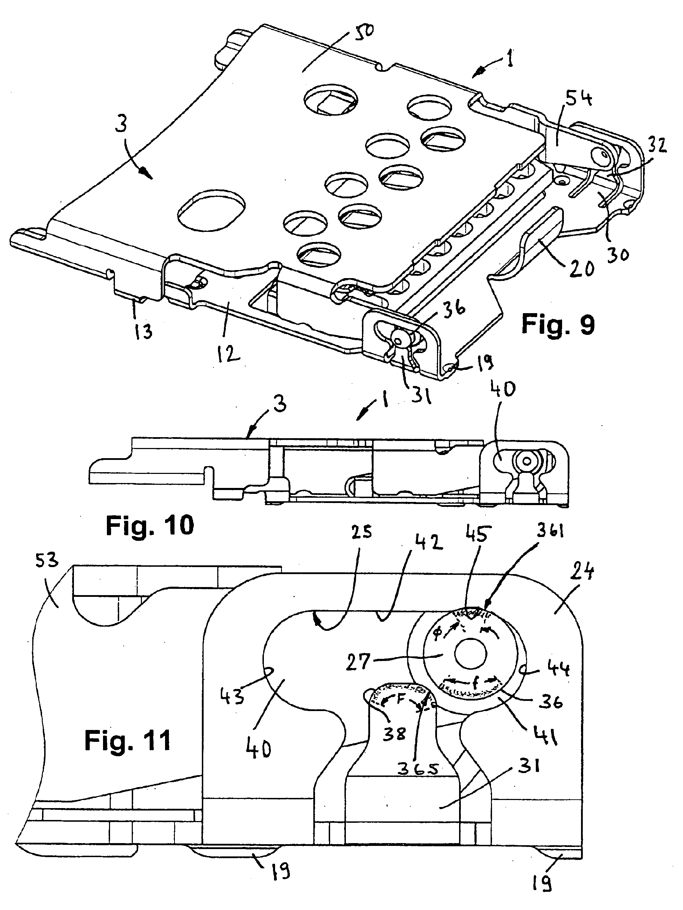

Im Folgenden werden die beiden längeren Seiten des Microkartenlesers 1, vgl. beispielsweise Fig. 9, als Längsseiten, und die quer dazu verlaufenden Querseiten als vordere Querseite und als hintere Querseite bezeichnet.

Der Deckel 3 kann aus der in Fig. 3 gezeigten Öffnungsstellung in eine in Figuren 1, 4, 5 und 6, 7 und 8 gezeigte Deckelschließstellung verschwenkt werden. Ausgehend von dieser Deckelschließstellung kann der Deckel 3 in die in den Figuren 9 und 10 gezeigte Zwischenstellung geschoben werden und von dort aus in, wie in Figur 11 gezeigt, die Deckelverriegelungsstellung bzw. die Kartenlesestellung.

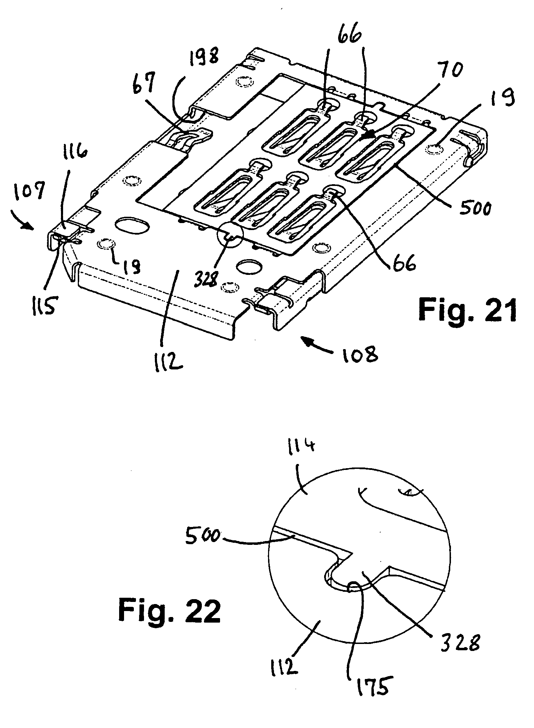

Der Grundkörper 2 ist wie in Fig. 1 gezeigt, vorzugsweise aus Metallblech hergestellt und weist eine Grundplatte 12 auf, die eine Aussparung bzw. Ausnehmung 18 besitzt, sodass als eine Begrenzung ein Steg 21 gebildet wird. Der Grundkörper 2 kann deshalb auch als Rahmen bezeichnet werden. In die Ausnehmung 18 ragen aus der Grundplatte 12 herausgestanzte Rasthaken 16 und 17 (Fig. 3 und 4), die nach oben umgebogen sind. Vom Steg 21 aus ragen grundkörperseitige Verriegelungsmittel vorzugsweise in der Form einer Nase 14 seitwärts und nach oben die mit noch zu beschreibenden deckelseitigen Verriegelungsmitteln 13 vorzugsweise in der Form von Verriegelungslappen 13 zusammenarbeiten können. Die grundkörperseitigen Verriegelungsmittel 14 und die deckelseitigen Verriegelungsmittel 13 bilden, wie in Fig. 1 angedeutet, beidseitig vorgesehene Deckel-Verriegelungsmittel 7 und 8. Ferner sind in der Grundplatte 12 mehrere Sicken 19 nach unten (vgl. Figur 6) herausgeprägt, die zur Auflage des Microkartenlesers 1 beispielsweise auf einer Schaltungsplatte bzw. Platine oder dergleichen dienen können. Die Auflageflächen der Sieken 19 liegen vorzugsweise mit den Kontaktpunkten (vgl. Fig. 21 des zweiten Ausführungsbeispiels) der Kontaktfedern 71 in einer Ebene.

In ihrem in Karteneinsteckrichtung hinteren Bereich bildet die Grundplatte 12 mittig einen Anschlag 20 für die Karte 9.

Ebenfalls im hinteren Bereich der Grundplatte 12 sind beidseitig Lagerplatten 22 und 23 bezüglich der Grundplatte 12 hochgebogen. In jeder der Lagerplatten 22, 23 ist jeweils eine Lageröffnung 25 bzw. 26 ausgebildet. Diese Lageröffnungen 25, 26 arbeiten mit noch zu beschreibenden, beidseitig am Deckel 3 ausgebildeten Lagerpfosten 27 und 28, zusammen. Die Lagerpfosten 27, 28 bilden vorzugsweise jeweils eine kreiszylindrische Außenoberfläche 36.

In die beiden Lageröffnungen 25 und 26 ragt jeweils eine Lagerzunge 31 bzw. 32. Die Lagerzungen 31, 32 sind, in Folge ihrer aus der Grundplatte 12 (unter Bildung von Schlitzen 33, 34) herausgestanzten Arme 29, 30 (Fig. 4), federnd. Vorzugsweise sind die Lagerarme 29, 30 der Zungen 31, 32 wie in Fig. 3 gezeigt etwas aus der durch die Grundplatte 12 aufgespannten Ebene herausgebogen. Es ist aber sichergestellt, dass die von den Lagerplatten 23, 24 aufgespannten Ebenen im Wesentlichen in einer anderen Ebene verlaufenen, als die von den Zungen 31, 32 aufgespannten Ebenen.

Die Lageröffnungen 25, 26 und die Zungen 31, 32 bilden zusammen mit den Lagerpfosten 25, 26 jeweils die Schwenk-/Gleitlager 5, 6.

Die Form der Lageröffnungen 25, 26 ist deutlicher in Fig. 11, am Beispiel der Lageröffnung 25 veranschaulicht, was aber in entsprechender Weise auch für die Lageröffnung 26 gilt.

Die Lageröffnung 25 weist (vgl. Fig. 11) zwei entgegengesetzt liegende im Wesentlichen halbkreisförmige Begrenzungsfläche 43, 44 auf, die oben durch eine geradlinige Lauf- bzw. Begrenzungsfläche 42 verbunden sind. Im unteren Bereich gehen die Begrenzungsflächen 43, 44 symmetrisch in eine nasenförmige Gestalt über. Wie insbesondere in Fig. 6 und 11 gezeigt, endet die geradlinige Lauffläche 42 an einer Ausbuchtungsfläche 45, die dann ihrerseits in die Begrenzungsfläche 44 übergeht. Auf diese Weise werden die beiden durch die Lagerzunge 31 getrennten Pfostenaufnahmeräume 40, 41 gebildet.

Die Lagerzunge 31 (ebenso aber auch die Lagerzunge 32 in Fig. 3) bildet für den Übergang des Lagerpfostens 27 aus der in Fig. 6 gezeigten Deckelschließstellung (die der zugeklappten Position des Deckels 3 gemäß Fig. 1 entspricht), über die in Fig. 9 und 10 gezeigte Zwischenposition in die Fig. 11 gezeigte Kartenlesestellung eine Führungsfläche 38, die in etwa eine Erstreckung F besitzt. Die Führungsfläche 38 dient zur Kontaktierung und Führung der Außenoberfläche 36 des Lagerpfostens 27 beim Übergang von der Deckelschließstellung zur Deckelverriegelungsstellung bzw. Kartenlesestellung.

### Der Klapp-/Schiebedeckel 3

Der Deckel 3 weist im Wesentlichen eine ebene Deckelgrundplatte 50 auf, die mit Öffnungen 51, 52 ausgestattet ist, um Zugang zu den Kontaktelementen 70 des Kontaktblocks 4 zu erlangen. Die Deckelgrundplatte 50 (vgl. Fig. 1) ist derart geformt, dass an ihren beiden Längsseiten am in Einsteckrichtung vorderen Ende Abwinklungsteile 59, 60 gebildet werden. Jeder der Abwinklungsteile 59, 60 bildet waagrechte Kartenführungsflächen 62, 64 und dazu senkrecht verlaufende Führungsflächen 63, 65.

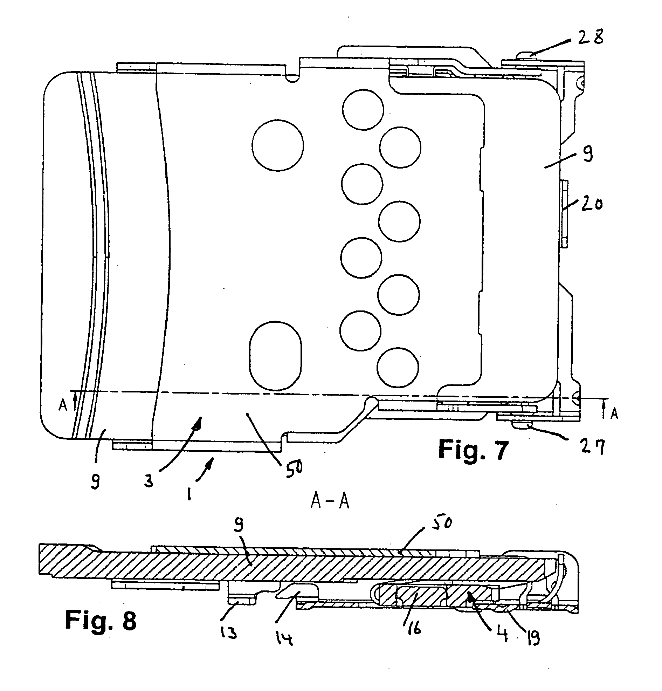

Im in Fig. 1 rechten oder in Einsteckrichtung hinteren Bereich sind beidseitig an den Längsseiten der Deckelgrundplatte 50 Lagerarme 53, 54 geformt, welche an ihren freien Enden, die bereits erwähnten Lagerpfosten bzw. Lagerzapfen 27 bzw. 28 bilden. Diese Lagerpfosten 27, 28 sind vorzugsweise aus dem Material der Lagerarme 53 bzw. 54 herausgedrückt. Jeder Lagerpfosten 27, 28 bildet die erwähnten vorzugsweise kreiszylindrischen Außenoberflächen 36, die als Gleitflächen bei der Verschiebung des Deckels 3 aus der Deckelschließstellung gemäß Fig. 8 in die Deckelverriegelungsstellung bzw. Kartenlesestellung gemäß Fig. 11 wirken.

Benachbart zu den Abwinklungsteilen 59, 60 sind die deckelseitigen Verriegelungsmittel 13 ausgebildet, und zwar mindestens auf der einen Längsseite, wie in Fig. 3 gezeigt. Diese deckelseitigen Verriegelungsmittel, in der Form von Lappen 13, laufen unter die grundkörperseitigen Verriegelungsmittel in der Form von Nasen 14 und verriegeln, wenn der Deckel 3 die Deckelverriegelungsstellung gemäß der Fig. 11 erreicht hat, den Deckel 3 an der Grundplatte 12, wobei beidseitig "Unterhakungen" gebildet werden.

Bei der Verriegelung des Deckels 3 am Grundkörper 2 in der in Fig. 11 veranschaulichten Kartenleseposition wirken ferner die in Fig. 4 und 5 angedeuteten Kontaktelemente 70 mit. Bei eingesetzter Karte 9 und insbesondere bei Erreichen der Verriegelungsstellung des Deckels bzw. der Lesestellung der Karte 9 (Fig. 11) drücken die Kontaktelemente 70 durch ihre Kontaktfedern 71 den Deckel 3 nach oben, so dass der Deckel 3, in der in Fig. 11 veranschaulichten Kartenlesestellung verbleibt. Die durch sämtliche (in der Fläche angeordnete) Kontaktfedern 71 erzeugte Verriegelungskraft ist vorzugsweise so groß eingestellt, dass nur bei eingesetzter Karte 9 die Kartenlesestellung erreicht wird, d.h. der Deckel aus der Deckelverriegelungsstellüng angehoben wird.

Wie in Fig. 1 gezeigt, sind die Lagerarme 53, 54 insbesondere auch in Folge der Ausschnitte 55 und 56 federnd, so dass sie leicht mit ihren Lagerpfosten 27, 28 von innen her die Öffnungen 25, 26 eingesetzt werden können. Auf diese Weise liegen die Führungs- bzw. Außenoberflächen 36 sowohl im Bereich der Führungsflächen 38 der Zapfen 31, 32 als auch im Bereich der Begrenzungsflächen 43, 44 sowie der Ausbuchtung 45.

Die vorzugsweise etwas nach innen gebogenen Lagerarme 53, 54 können zur Deckelzentrierung an vom Kontaktträger bzw. Kontaktblock 104 gebildeten Führungsflächen gleiten.

In Fig. 11 erkennt man, dass der Lagerpfosten 27 bei seiner Bewegung aus der Deckeischließstellung gemäß Fig. 7 und 8 über die Zwischenstellung gemäß Fig. 9 und 10 über die Deckelverriegelungsstellung in die Kartenlesestellung gemäß Fig. 11 in einem Bereich Φ bzw. im Bereich F mit der Lauffläche 42 bzw. der Führungsfläche 38 in Gleitberührung steht. Dies gewährleistet eine sichere Abschirmung durch guten Erdkontakt.

Erfindungsgemäß bedeutet dies, dass die Kontaktelemente 70 bei eingelegter Karte 9 den Deckel 3 (103) so nach oben drücken, dass die Lagerpfosten 27 beim Verschieben des Deckels in die Schließposition mit ihrer oberen Außenoberfläche 36 die Lageröffnung 25 entlang der Lauf- bzw. Begrenzungsfläche 42 kontaktieren.

In der Kartenlesestellung gemäß Fig. 11 entsteht ein Kontaktbereich 361 zwischen der Außenoberfläche 36 des Lagerpfostens 27 und Ausbuchtungsfläche 45 der Lageröffnung 25 in dem kein Abrieb auftritt. Es gibt in der Kartenlesestellung gemäß Fig. 11 vorzugsweise keine Berührung zwischen einem Führungsflächenteil 365 (Fig. 11) der Fläche 38 und der Außenoberfläche 36.

Erfindungsgemäß ist also vorgesehen, dass die Kontaktelemente 70 bei eingesetzter Karte 9 zusätzlich der Erzeugung der Verriegelungskraft in den Deckelverriegelungselementen 113, 114 als auch der Erzeugung der Kräfte zum Kontaktieren der am Deckel 3 befindlichen Schwenk/Gleitlager 5, 6 mit dem Grundkörper 2 dienen.

### Der Kontaktblock 4

Der vorzugsweise vorbestückte Kontaktblock 4 weist einen Isolierkörper auf in den die Kontaktelemente 70 befestigt sind, und er wird bei geöffnetem Deckel 3 von oben her auf die Grundplatte 12 aufgedrückt, wobei die Rasthaken 16 und 17 in Ausnehmungen 80 des Kontaktblocks 4 eindringen und (wie in Fig. 5 gezeigt) in das Material des Kontaktblocks 4 einschneiden, so dass der Kontaktblock 4 auf der Grundplatte 12 festgehalten wird.

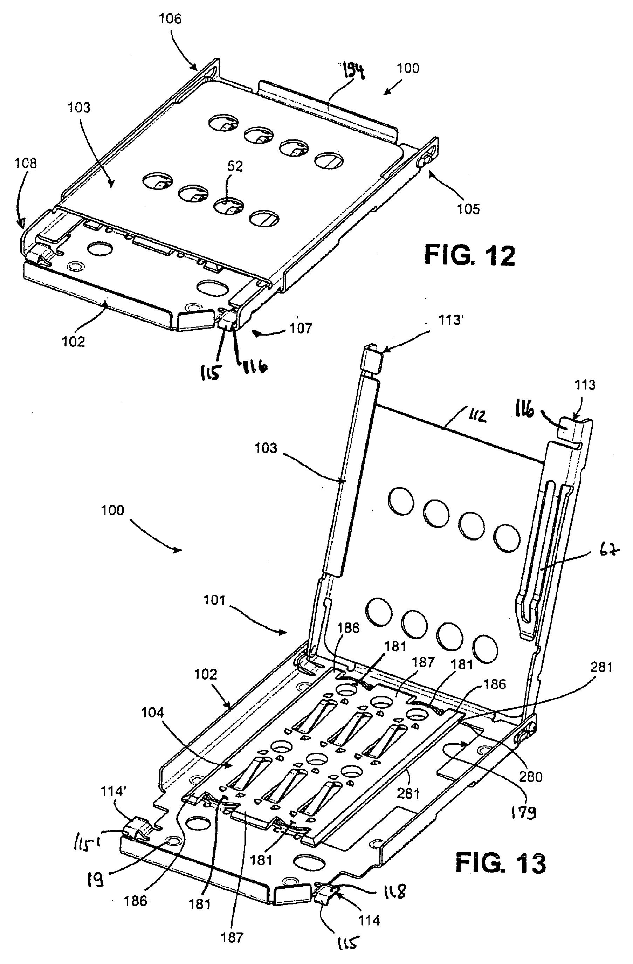

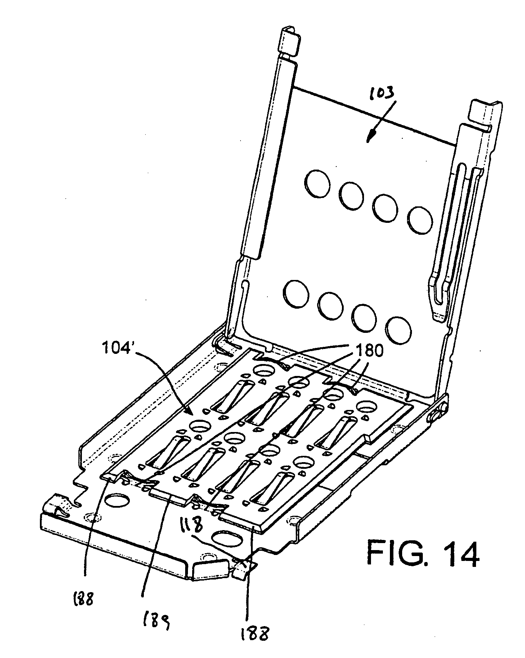

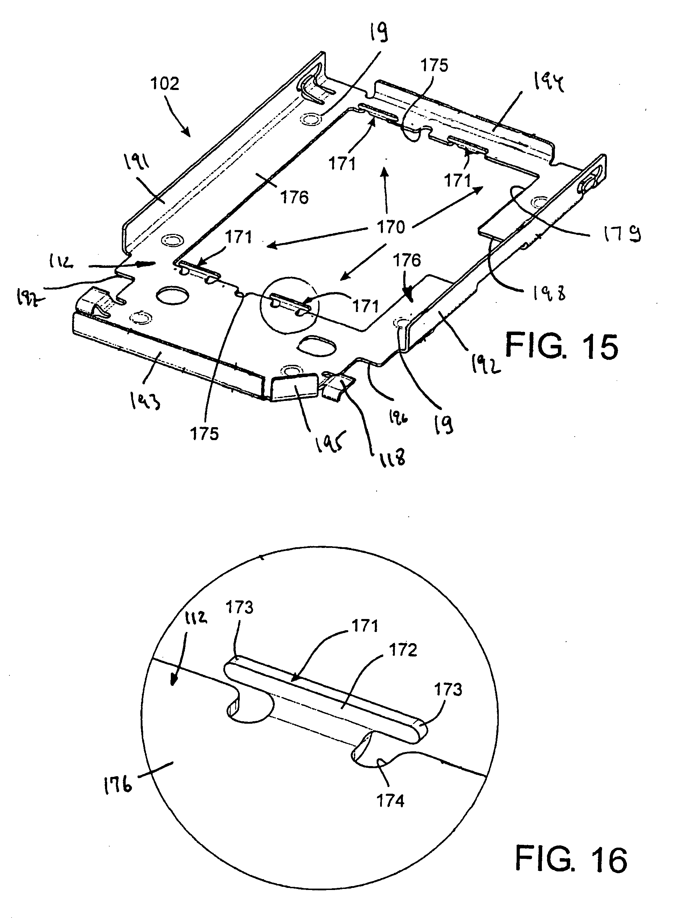

Im Folgenden wird anhand der Figuren 12 bis 22 ein zweites Ausführungsbeispiel eines Microkartenlesers 100 beschrieben. Der Microkartenleser 100 weist ähnlich wie beim ersten Ausführungsbeispiel eine Karten- und Kontaktblockaufnahmevorrichtung 101 (Figur 13) auf, in die zur Bildung des Microkartenlesers 100 ein Kontaktblock 104 (Figur 13) bzw. 104' (vgl. Figur 14) eingesetzt ist. Die Kontaktblockaufnahmevorrichtung 101 weist einen Kontaktblockaufnahmekörper 102, im Folgenden kurz Grundkörper 102 bzw. Rahmen 102 sowie einen daran durch Schwenk-/ Gleitlager 105, 106 angeordneten Klapp-/ Schiebedeckel 103 auf. Dieses Ausführungsbeispiel veranschaulicht deutlich die Möglichkeit der Verwendung unterschiedlich dimensionierter Kontaktblöcke 104, 104' in der gleichen Aufnahmevorrichtung 101 bzw. deren Grundkörper 102.

Der Deckel 103 kann aus seiner in Figur 13 und 14 gezeigten Öffnungsstellung in eine nicht dargestellte Deckelschließstellung verschwenkt werden. Ausgehend von der nicht dargestellten Deckelschließstellung kann der Deckel 103 dann über eine ebenfalls nicht gezeigte Zwischenstellung (entsprechend etwa der - hier aber in entgegengesetzter Richtung zu durchlaufenden - Zwischenposition des ersten Ausführungsbeispiels) in die in Figuren 12 und 21 gezeigte Deckelverriegelungsstellung bzw. Kartenlesestellung verschoben werden.

Beim zweiten Ausführungsbeispiel gemäß den Figuren 12 bis 22 sind die Schwenk/Gleitlager 105, 106 bzw. Scharniere ähnlich wie die Schwenk/Gleitlager 5, 6 beim ersten Ausführungsbeispiel ausgebildet, wobei aber beim zweiten Ausführungsbeispiel die Ausbuchtungsfläche 45 entgegengesetzt, also benachbart zu der der Begrenzungsfläche 43 entsprechenden Begrenzungsfläche angeordnet ist.

Der Grundkörper 102 ist vorzugsweise aus Metallblech hergestellt und weist eine Grundplatte 112 auf, die eine Ausnehmung 179 besitzt. Von der Grundplatte 112 aus ragen an jeweils gegenüberliegenden Seiten Wände 191 und 192 sowie 193, 195 und 194 nach oben und begrenzen eine Kontaktblockauflagefläche (Grundplattenoberseite) 176. Ebenfalls beidseitig sind gegenüberliegende Ausschnitte 196, 197 in der Grundplatte 112 vorgesehen. In dem Teil der Grundplatte 112 der benachbart zur Seitenwand 192 verläuft ist ein Ausschnitt 198 ausgebildet.

Um den Deckel 103 in der in der Figur 12 gezeigten Deckelverriegelungsstellung bzw. der in Figur 21 gezeigten Kartenlesestellung zu halten, sind Deckel-verriegelungsmittel 107, 108 vorgesehen, die beidseitig in Figur 12 im in Karteneinsteckrichtung vorderen Bereich des Lesers 100 angeordnet sind. Die ersten und zweiten Deckelverriegelungsmittel 107, 108 sind im Wesentlichen in gleicher Weise ausgebildet, so dass nur die ersten Deckelverriegelungsmittel 107 detaillierter beschrieben werden. Die ersten Deckelverriegelungsmittel 107 weisen erste deckelseitige Verriegelungsmittel 113 und erste grundkörperseitige Verriegelungsmittel 114, 114' auf. Die ersten deckelseitigen Verriegelungsmittel 113 sind gemäß Figur 12 am vorderen Ende des Deckels ausgebildet und werden insbesondere durch ein abgebogenes Plattenelement 116 gebildet. Die grundkörperseitigen Deckeiverriegelungsmittel 114, 114' sind benachbart zum vorderen Ende der Grundplatte 112 ausgebildet und besitzen vorzugsweise die Form eines benachbart zum Ausschnitt 196 vorstehenden Plattenelements 118, welches die nach vorne hin einen nach unten gebogenen Anschlagteil 115, 115' bildet.

In der Deckelverriegelungsstellung nach Figur 12 sowie der in Figur 21 dargestellten Lesestellung des Lesers 100 liegt die Vorderkante des Plattenelements 116 an der Innenseite des Anschlagsteils 115 an, wie man in den Figuren 12 und 21 erkennt.

Erfindungsgemäß ist der Grundkörper 102, speziell die Grundplatte 112 mit der Ausnehmung 179 derart ausgebildet, dass aus Isoliermaterial bestehende Kontaktträger bzw. Kontaktblöcke 104, 104' (mit eingesetzten Kontaktelementen 70) von unterschiedlicher Größe beispielsweise von unterschiedlicher Breite eingesetzt werden können. Dies ist für den schmäleren Kontaktträger 104 in den Figuren 13 sowie 17 und 19 und für einen breiteren Kontaktträger 104 (mit sechs Kontaktelementen) in Figur 14 dargestellt.

Im Hinblick auf die kleinen bei einem Microkartenleser 100 vorhandenen Abmessungen ist die Befestigung des Kontaktblocks 104, 104' an der Grundplatte 112 von großer Bedeutung und wird durch die im Folgenden beschriebenen (sich vom ersten Ausführungsbeispiel unterscheidenden) Kontaktblockbefestigungsmittel vorgesehen.

Die erfindungsgemäßen Kontaktblockbefestigungsmittel zur Befestigung unterschiedlicher Kontaktblöcke 104, 104' an der Grundplatte 112 sind mehrteilig, wobei die einzelnen Teile in mehreren Kontaktblockbefestigungsbereichen angeordnet sind.

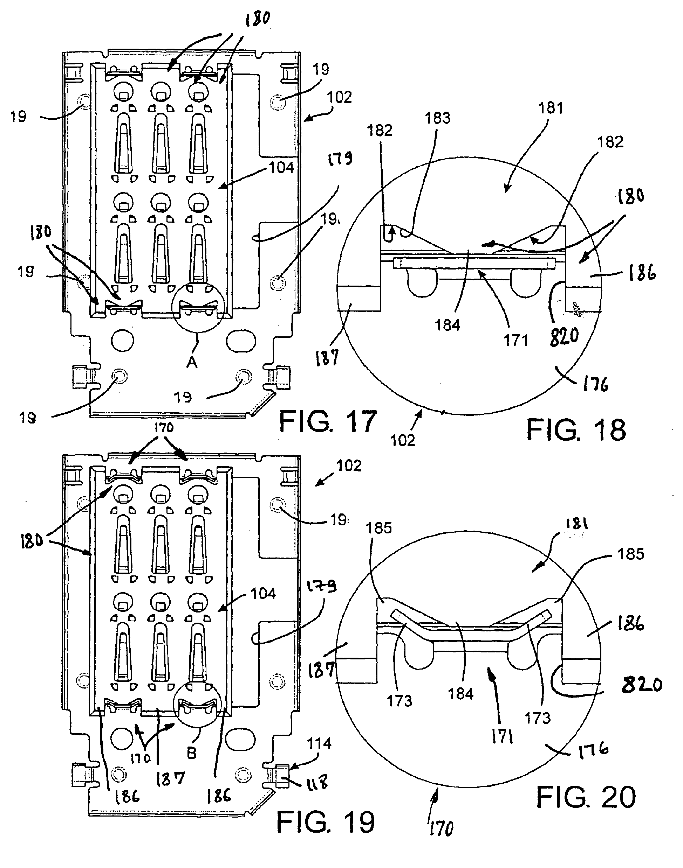

Im dargestellten Ausführungsbeispiel sind insbesondere vier Kontaktblockbefestigungsbereiche dargestellt. Die Kontaktblockbefestigungsbereiche sind vorzugsweise von identischem Aufbau. Einer der Kontaktblockbefestigungsbereiche ist im Wesentlichen in Figuren 18 und 20 veranschaulicht, und zwar in Figur 18 vor der Befestigung und in Figur 20 nach der Befestigung.

Im Einzelnen weisen die Kontaktblockbefestigungsmittel grundplattenseitige Befestigungsmittel 170 und kontaktblockseitige Befestigungsmittel 180 auf.

Die grundplattenseitigen Kontaktblockbefestigungsmittel 170 werden durch mehrere grundplattenseitige Kontaktblockbefestigungselemente 171 sowie durch die Kontaktblockauflagefläche 176 bildende Oberfläche der Grundplatte 112 gebildet. Jedes der grundplattenseitigen Kontaktblockbefestigungselemente 171 besitzt einen nach oben aus der Grundplatte 112 herausgebogenen Arm 172, der entgegengesetzt liegende Flügel 173 aufweist. Beidseitig in der Ebene der Grundplatte 112 liegende Ausnehmungen 174 tragen zur Bildung des Armes 172 bei.

Die kontaktblockseitigen Kontaktblockbefestigungsmittel 180 weisen mehrere mit den Befestigungselementen 171 zusammenwirkende Befestigungsteile 181 auf. Jeder der Teile (oder Abschnitte) 181 weist einen Kontaktblockbefestigungsausschnitt 820 im Kontaktblock 104, 104' auf. Durch jeden Ausschnitt 820 werden Kontaktblockauflagebereiche bzw. -vorsprünge 186, 187 im Kontaktblock 104 gebildet. Die Befestigungsausschnitte 820 sind im Ganzen vorzugsweise rechteckig und dienen zur Aufnahme der entsprechenden grundplattenseitigen Befestigungselemente 171.

Während ein Teil des Ausschnitts 820 die gesamte Dicke des Kontaktblocks 104, 104' durchsetzt sind vorzugsweise zwei abgeschrägte Befestigungsausschnittteile 182 vorgesehen, die von Schrägflächen 183, die eine Nase 184 bilden, begrenzt sind. Die abgeschrägten Ausschnittteile 182 besitzen jeweils eine geringfügig abgesetzte oder abgesenkte Auflagefläche 185 für die Auflage der Flügel 173 im Befestigungszustand des Kontaktblocks 104, 104'.

Die kontaktblockseitigen Befestigungsmittel 180 umfassen ferner, wie erwähnt, vorzugsweise die an den beiden Stirnseiten des Kontaktblocks 104, 104' ausgebildeten Vorsprünge 186 und 187, die durch die Ausschnitte 820 entstehen. Die Vorsprünge 186 und 187 können unterschiedliche Breiten besitzen, wie dies in Figur 14 gezeigt ist. Sie liegen mit ihren Unterseiten auf der Grundplattenoberseite 176 auf. Auch eine die Längsseiten in Fig. 13, und beide Längsseiten in Fig. 14 liegen vorzugsweise auf der Oberfläche 176 auf.

Erfindungsgemäß ist der Microkartenleser 100 (wie auch der Microkartenleser 10 des ersten Ausführungsbeispiels) geeignet unterschiedlich breite Kontaktblöcke 104, 104' aufzunehmen.

Zur Verbesserung der richtigen Ausrichtung des Kontaktblocks 104, 104' in der Ausnehmung 179 der Grundplatte 112 sind in dieser vorzugsweise diametral angeordnete Führungsausnehmungen 175 vorgesehen, die vorzugsweise auf entgegen gesetzten Querseiten angeordnet sind und in die am Kontaktblock 114, 114' ausgebildete Vorsprünge 328 ragen.

Ferner sind wie beim ersten Ausführungsbeispiel Sieken 19 vorgesehen, die über die in Figur 21 oben dargestellte Unterseite der Grundplatte 102 hochragen und mit ihren obersten Punkten erfindungsgemäß in derselben Ebene liegend wie die Anschlusspunkte 66 der Kontaktelemente 70 angeordnet sind.

In der Figur 21 ist ferner ein am Deckel 103 ausgebildeter Kontaktarm 67 dargestellt, der durch den Ausschnitt 198 den Kontakt zur Masse herstellen kann.

Um einen Kontaktblock 104, 104' an dem Grundkörper 102 zu befestigen, wird der Kontaktblock 104, 104' in die Ausnehmung 179 derart eingesetzt, dass die Vorsprünge 188, 189 auf der Oberseite bzw. Auflagefläche 176 der Grundplatte 102 aufliegen und Vorsprünge 328 des Kontaktblocks in Eingriff mit den Führungsausnehmungen 175 stehen. Sodann werden die Flügel 173 aus der in Figur 18 gezeigten Position in die in Figur 20 gezeigte Position verschwenkt, was den Befestigungsvorgang des Kontaktblocks 104 an der Grundplatte 102 beendet.

Erfindungsgemäß können (wie in den Fig. 13 und 14 gezeigt) in die Ausnehmung 179 der Grundplatte 112 Kontaktblöcke 104, 104' mit unterschiedlicher Größe und beispielsweise unterschiedlicher Breite eingesetzt werden.

Die Kontaktblöcke 104, 104' werden wie erwähnt mit den kleinen Flügeln 173, die von der den Metallrahmen bildenden Grundplatte 112 gebildet werden, befestigt dadurch das diese nach dem Einsetzen des Kontaktblocks umgebogen werden.

Der Kontaktblock 104, 104' wird durch die Flügel 173 in der Höhe fixiert, wodurch die Koplanarität zwischen Kontaktblock und 104, 104' und Rahmen bzw. Grundplatte 102 gewährleistet wird.

Zwischen dem Kontaktblock 104, 104' und dem Metallrahmen bzw. der Grundplatte 112, dass heißt zwischen der Innenkantenfläche 280 (Figur 13) der Ausnehmung 179 und dem Kontaktblock , d. h. dessen Umfangskantenfläche 281 wird ein umlaufender schmaler Spalt 500 (Fig. 21 und 22) vorgesehen. Durch das Vorsehen dieses schmalen Spaltes 500 werden Spannungen und ein Verzug durch unterschiedliche Wärmeausdehnungen der Komponenten beim Reflowlöten vermieden.

Der Klapp-/Schiebedeckel 103 der durch die Scharniere in Form von Schwenk-/ Gleitlagern 105, 106 mit dem Grundkörper bzw. der Grundplatte 102 verbunden ist, besitzt im geschlossenen Zustand einen elektrischen Kontakt zu dem Grundkörper, wodurch eine Abschirmung der Karte gewährleistet ist.

Der Deckel 103 kann optional mit einem Schaltarm ausgestattet werden, welchen im Zusammenhang mit Pads auf der Leiterplatte durch Öffnungsbewegung des Deckels erfasst.

Erfindungsgemäß wird durch den Metallrahmen und den Metalldeckel eine geringe Baugröße realisiert. Ferner kann der Metallrahmen modular bestückt werden und Wärmespannungen aufgrund unterschiedlicher Wärmeausdehnungen werden, wie oben erwähnt, vermieden.

Eine wichtige durch die Erfindung gelöste Problematik ist, die Verriegelung eines Deckels in der Lesestellung des Kartenlesers. Wenn dies über eine Federverriegelung geschieht, dann kann diese Verriegelung an der Seite des Lesers vorgesehen sein, dass heißt wenn man den Deckel verschiebt, rastet dieser irgendwo über seitlich auslenkende Federn ein. Die erfindungsgemäße Verriegelung sieht vor, dass die Federkraft für das Scharnier, dass heißt die

Gleit/Schiebelagermittel über die (gesamte) Fläche verteilt, vorgesehen wird. Dies ergibt eine günstigere Baugröße. Der Deckel kann sich ohne Karte auf der den Leser tragenden Platine abstützen, das heißt ohne Karte ruht er lose auf der Platine. Die erfindungsgemäßen Federmittel in der Form der Kontaktelemente mit ihren Kontaktfederarmen sind so ausgelegt, dass diese bei nicht vorhandener Karte den Deckel nicht berühren, bei eingesetzter Karte aber über die Karte den Deckel in die Lesestellung des Kartenlesers drücken.

Beim Ausführungsbeispiel gemäß Figuren 12 bis 21 sind vorzugsweise die beiden Seitenwände des Deckels 103 derart angeordnet, dass sie bei geschlossenem Deckel 103 innerhalb der Seitenwände 191, 192 des Grundkörpers 102 liegen (vgl. Figur 12).

Dadurch, dass man insbesondere vorsieht, dass die Kontaktfedern bei nicht vorhandener Karte nicht gegen den Deckel drücken, werden diese nicht ständig beansprucht, was im Hinblick auf die Lagerzeit der Kartenleser von Vorteil ist, insbesondere auch deshalb, weil die Kontaktschicht der Kontaktelemente nicht belastet wird.

Auf die folgenden bevorzugten Merkmale sei hingewiesen:

Der Kartenanschlag dient als Anschlag und Abrollfläche für die Karten beim Schließen des Deckels

Die Lagerplatten sind einstückig mit dem Grundkörper gebildet.

Die Länge des Grundträgers ist kürzer als die Länge des Deckels.

Die Grundplatte ist als Metallrahmen zur Aufnahme eines Kontaktblocks ausgebildet.

Die Lagerarme durchdringen mit ihren Lagerpfosten die Lageröffnungen von Innen her.

Am Grundkörper sind wahlweise unterschiedlich dimensionierte Kontaktblöcke befestigbar und zwar mit einem am Grundkörper schwenk- und gleitbar gelagerten zur Aufnahme einer Microkarte dienenden Klapp-/Schiebedeckel.

Im Grundkörper ist eine Ausnehmung vorgesehen, in die vor zugsweise ein ausgewählter Kontaktblock einsetzbar und befestigbar ist.

Die Kontaktblockbefestigungsmittel sind zur Befestigung unterschiedlicher Kontaktblöcke an der Grundplatte vorgesehen.

Die Kontaktblockbefestigungsmittel sind mehrteilig ausgebildet, wobei die einzelnen Teile in mehreren Kontaktblockbefestigungsbereichen angeordnet.

Die Kontaktblockbefestigungsmittel weisen grundplattenseitige Kontaktblockbefestigungsmittel und kontaktblockseitige Kontaktblockbefestigungsmittel auf.

Die grundplattenseitigen Befestigungsmittel sind durch mehrere grundplattenseitige Befestigungselemente sowie durch die Oberseite der Grundplatte gebildet.

Die grundplattenseitigen Kontaktblockbefestigungselemente weisen einen nach oben aus der Grundplatte herausgebogenen Arm auf, der in entgegengesetzt angeordneten Flügeln endet.

Die kontaktblockseitigen Befestigungsmittel weisen durch mehrere mit den grundplattenseitigen Kontaktblockbefestigungselementen zusammenwirkende Befestigungsausschnittteile auf.

Die Befestigungsmittel weisen ferner Kontaktauflagevorsprünge auf.

Ein Teil des Ausschnitts durchsetzt die gesamte Dicke des Kontaktblocks, wobei aber ein anderer Teil des Ausschnitts eine geringfügig abgesetzte oder abgesenkte Auflagefläche für die Auflage der Flügel im Befestigungszustand des Kontaktblocks aufweist.

Der Kontaktblock weist Vorsprünge auf, die in diametral in der Grundplatte ausgewählte Führungsausnehmungen einsetzbar sind.

Die Sieken sind in der Grundplatte ausgebildet, die von der Unterseite der Grundplatte wegragen und mit ihren obersten Punkten in derselben Ebene liegen wie die von den Anschlusspunkten der Kontaktelemente aufgespannte Ebene.

Der Deckel wird aus der Deckelschließung über eine Zwischenstellung in die Deckelverriegelungsstellung entweder in der Karteneinsteckrichtung (Figuren 1 bis 11) oder entgegengesetzt zur Karteneinsteckvorrichtung (Figuren 12 bis 22) verschoben.

In der jeweiligen Deckelverriegelungsstellung ist eine Ausbuchtungsfläche gebildet.

Zwischen dem Kontaktblock und der Grundplatte ist ein umlaufender schmaler Spalt vorgesehen.

Federmittel, die bei eingesetzter Karte in der Deckelverriegelungsstellung die Karte mitsamt dem Deckel anheben (Figur 11) und so eine Kartenlesestellung definieren, sind vorgesehen.

## Patentansprüche

1. Modular aufgebauter Microkartenleser mit einem Grundkörper (2, 102) zur Aufnahme und Befestigung eines Kontaktelemente (70) tragenden Kontaktblocks (4, 104, 104') und mit einem am Grundkörper (2, 102) schwenkbar gelagerten zur Aufnahme einer Microkarte (9) dienenden Deckel, vorzugsweise einem Klapp/Schiebedeckel (3, 103),
wobei der Deckel (3) eine Deckelgrundplatte (50) aufweist, von der aus Lagerarme (53, 54) beidseitig wegragen, die an ihren freien Enden Lagerpfosten (27, 28) besitzen, die mit entsprechenden am Grundkörper (2) ausgebildeten Lageröffnungen (25, 26) in Eingriff stehen,
und wobei der Grundkörper (2, 102) eine Grundplatte (12) aufweist,
**dadurch gekennzeichnet, dass**
die Grundplatte (12) beidseitig Lagerzungen (31, 32) bildet, die in den Bereich der Lageröffnungen (25, 26) hineinragen, und die bei einer Längsverschiebung des Deckels (3) aus dessen Klappposition in die Leseposition ausgelenkt werden.

2. Microkartenleser nach Anspruch 1, wobei eine Auslenkung der Lagerzungen (31, 32) durch die Außenoberfläche (36) der Lagerpfosten (27, 28) erfolgt.

3. Microkartenleser nach Anspruch 1, wobei der Deckel (3) über Schwenk/Gleit-Lagermittel (5, 6) am Grundkörper (2) angebracht ist.

4. Microkartenleser nach Anspruch 3, wobei die Schwenk/Gleit-Lagermittel X (5, 6) ein grundkörperseitiges Schwenk/Gleit-Lager (5) und ein deckelseitiges Schwenk/Gleit-Lager (6) aufweisen.

5. Microkartenleser nach Anspruch 1, wobei von der Grundplatte (12) aus beidseitig Lagerplatten (23, 24) nach oben ragen, in denen die Lageröffnungen (25, 26) ausgebildet sind, in die von innen her die Lagerpfosten (27, 28) eingreifen.

6. Microkartenleser nach einem der Ansprüche 1 oder 5, **gekennzeichnet dadurch, dass** die Lagerpfosten (27, 28) eine kreiszylinderförmige Außenoberfläche (36) aufweisen.

7. Microkartenleser nach einem der Ansprüche 1 oder 5, wobei die Lageröffnungen (25, 26) im Wesentlichen kreisförmige einander gegenüberliegende Begrenzungsflächen (43, 44) definieren, wobei die Begrenzungsflächen (43, 44) in ihrem oberen Bereich durch eine im Wesentlichen geradlinige Lauffläche (42) verbunden sind.

8. Microkartenleser nach einem der vorhergehenden Ansprüche, wobei sowohl der Deckel (3; 103) als auch die Grundplatte (12) aus Metall bestehen.

9. Microkartenleser nach Anspruch 1, **dadurch gekennzeichnet, dass** die Lagerpfosten (27, 28) als Tiefziehnapf ausgebildet sind.

10. Microkartenleser nach Anspruch 4, **dadurch gekennzeichnet, dass** die Kontaktelemente (70) bei eingesetzter Karte (9) zusätzlich der Erzeugung der Verriegelungskraft in Deckelverriegelungselementen (113, 114) als auch der Erzeugung der Kräfte zum Kontaktieren der am Deckel (3, 103) befindlichen Schwenk/Gleitlager (5, 6; 105, 106) mit dem Grundkörper (2, 102) dienen.

11. Microkartenleser nach Anspruch 10, **dadurch gekennzeichnet, dass** die Kontaktelemente (70) bei eingelegter Karte (9) den Deckel (3, 103) so nach oben drücken, dass die Lagerpfosten (27) beim Verschieben des Deckels (3; 103) in die Schließposition mit ihrer oberen Außenoberfläche (36) die Lageröffnung (25) entlang einer Lauf- bzw. Begrenzungsfläche (42) kontaktieren.

12. Microkartenleser nach Anspruch 11, wobei die Kontaktierung im oberen Bereich der Lageröffnung (25, 26) im geschlossenen Zustand erfolgt, **dadurch gekennzeichnet, dass** der Deckel (3, 103) bei eingelegter Karte von den Lesekontakten des Kontaktblocks (4) nach oben gegen eine Ausbuchtungsoberfläche (45) der Lageröffnung (25) gedrückt wird.

13. Microkartenleser nach Anspruch 12, wobei die Ausbuchtungsoberfläche (45) eine Kontur besitzt, die ein Eintauchen der Lagerzapfen in die Kontur teilweise ermöglicht, so dass der Kontaktbereich (361) neben der Ausbuchtungsoberfläche (45) erfolgt.

## Claims

1. A microcard reader in modular design, said microcard reader comprising a base body (2, 102) adapted to receive and mount a contact block (4, 104, 104') supporting contact elements (17), and a cover pivotally mounted at the base body (2, 102), and adapted to receive a microcard (9), said cover (3), preferably being a hinge-slide cover, comprising a cover base plate (50) having hinge armes (53, 54) projecting from both sides of said cover base plate (50), said hinge arms (53, 54) having at their free ends bearing pins (27, 28), which are in engagement with respective bearing openings (25, 26) formed at the base body (2), and
wherein the base body (2, 102) comprises a base plate (12), **characterized in that** the base plate (12) forms on both sides bearing tongues (31, 32) which project into the area of the bearing openings (25, 26) and wherein said bearing tongues (31, 32) are moved out of their position during a longitudinal slide of the cover (30) from its hinge position into the reading position.

2. The microcard reader as set forth in claim 1 wherein a deflection of the bearing tongues (31, 32) is effected by the outer surface (36) of the bearing pins (27, 28).

3. The microcard reader as set forth in claim 1 wherein the cover (3) is mounted at the base body (2) by means of pivot/slide-bearing means (5, 6).

4. The microcard reader as set forth in claim 3, wherein the pivot/slide-bearing means (5, 6) comprise a pivot/slide bearing (5) on the side of the base body and a pivot/slide bearing (6) on the side of the cover.

5. The microcard reader as set forth in claim 1, wherein said bearing plates (23, 24) project upwardly from both sides of the base plate (12) with bearing openings (25, 26) being formed in said bearing plates (23, 24), said bearing pins (27, 28) being in engagement with the bearing openings (25, 26) from the inside.

6. The microcard reader as set forth in one of the claims 1 or 5 **characterized in that** the bearing pins (27, 28) comprise an outer surface (36) in the form of the circular cylinder.

7. The microcard reader according to one of the claims 1 or 5 wherein the bearing openings (25, 26) define in substance circular limiting surfaces (43, 44) which are oppositely arranged, wherein said limiting surfaces (43, 44) are connected in their upper area by a substantially straight linear baring surface (42).

8. The microcard reader according to one or more of the preceding claims wherein the cover (3, 103) as well as the base plate (12) are made of metal.

9. The microcard reader as set forth in claim 1 **characterized in that** the bearing pins (27, 28) are formed as a deep drawn detent.

10. The microcard reader as set forth in claim 4 **characterized in that** the contact elements (70) serve, when the card (19) is inserted, in addition to generate the locking force for the cover locking elements (113, 114), and also to generate the forces for contacting the pivot/slide bearings (5, 6; 105, 106) at the cover (3, 103) with the base body (2, 102).

11. The microcard reader as set forth in claim 10 **characterized in that** the contact elements (70) press, when the card (9) is inserted, the cover (3, 103) upwardly such that the bearing pins (27) contact with their upper outer surface (36), during movement of the cover (3, 103) into the closing position, the bearing opening (25) along a limiting slide surface (42).

12. The microcard reader as set forth in claim 11 wherein the contacting in the upper area of the bearing opening (25, 26) occurs in the closed condition **characterized in that** the cover (3, 103) is pressed, when a card is inserted, by the reading contacts of the contact block (4) upwardly against a bulge surface (45) of the bearing opening (25).

13. The microcard reader as set forth in claim 12 **characterized in that** the bulge upper surface (45) has a contour which allows a partial insertion into the contour, such that the contact area (361) occurs adjacent to the bulge upper surface (45).

## Revendications

1. Lecteur de microcarte à conception modulaire, le lecteur de microcarte comprenant un corps de base (2, 102) adapté à la réception et au montage d'un bloc de contacts (4, 104, 104') supportant des éléments de contact (17), et un couvercle monté de façon pivotante sur le corps de base (2, 102), et adapté à recevoir une microcarte (9), le couvercle (3), étant de préférence un couvercle à charnière coulissant, comprenant une plaque de base de couvercle (50) comportant des bras de charnière (53, 54) faisant saillie à partir des deux côtés de la plaque de base de couvercle (50), les bras de charnière (53, 54) comportant au niveau de leurs extrémités libres des axes de palier (27, 28), qui sont engagés dans des ouvertures de palier correspondantes respectives (25, 26) formées au niveau du corps de base (2), et
dans lequel le corps de base (2, 102) comprend une plaque de base (12), **caractérisé en ce que** la plaque de base (12) forme sur les deux côtés des languettes de palier (31, 32) qui font saillie dans la région des ouvertures de palier (25, 26) et dans lequel les languettes de palier (31, 32) sont déplacées hors de leurs positions pendant un coulissement longitudinal du couvercle (30) à partir de sa position de charnière vers sa position de lecture.

2. Lecteur de microcarte selon la revendication 1, dans lequel une déviation des languettes de palier (31, 32) est effectuée par la surface extérieure (36) des axes de palier (27, 28).

3. Lecteur de microcarte selon la revendication 1, dans lequel le couvercle (3) est monté sur le corps de base (2) au moyen de moyens de paliers pivotants/coulissants (5, 6).

4. Lecteur de microcarte selon la revendication 3, dans lequel les moyens de paliers pivotants/coulissants (5, 6) comprennent un palier pivotant/coulissant (5) sur le côté du corps de base et un palier pivotant/coulissant (6) sur le côté du couvercle.

5. Lecteur de microcarte selon la revendication 1, dans lequel les plaques de palier (23, 24) font saillie vers le haut à partir des deux côtés de la plaque de base (12), des ouvertures de palier (25, 26) étant formées dans les plaques de palier (23, 24), les axes de palier (27, 28) étant en contact avec les ouvertures de palier (25, 26) à partir de l'intérieur.

6. Lecteur de microcarte selon l'une des revendications 1 ou 5, **caractérisé en ce que** les axes de palier (27, 28) comprennent une surface extérieure (36) ayant la forme d'un cylindre circulaire.

7. Lecteur de microcarte selon l'une des revendications 1 ou 5, dans lequel les ouvertures de palier (25, 26) définissent en substance des surfaces de limitation circulaires (43, 44) qui sont disposés de façon opposée, dans lequel les surfaces de limitation (43, 44) sont connectées dans leur région supérieure par une surface de palier linéaire sensiblement droite (42).

8. Lecteur de microcarte selon une ou plusieurs des revendications précédentes, dans lequel le couvercle (3, 103) ainsi que la plaque de base (12) sont en métal.

9. Lecteur de microcarte selon la revendication 1, **caractérisé en ce que** les axes de palier (27, 28) sont formés sous forme de crans emboutis.

10. Lecteur de microcarte selon la revendication 4, **caractérisé en ce que** les éléments de contact (70) servent, lorsque la carte (19) est insérée, en plus pour générer la force de verrouillage pour les éléments de verrouillage du couvercle (113, 114), et aussi pour générer les forces destinées à amener en contact les paliers pivotants/coulissants (5, 6 ; 105, 106) au niveau du couvercle (3, 103) avec le corps de base (2, 102).

11. Lecteur de microcarte selon la revendication 10, **caractérisé en ce que** les éléments de contact (70) pressent, lorsque la carte (9) est insérée, le couvercle (3, 103) vers le haut de telle sorte que les axes de palier (27) contactent avec leur surface extérieure supérieure (36), pendant le mouvement du couvercle (3, 103) vers la position de fermeture, l'ouverture de palier (25) le long d'une surface de limitation de coulissement (42).

12. Lecteur de microcarte selon la revendication 11, dans lequel le contact dans la région supérieure de l'ouverture de palier (25, 26) a lieu dans l'état fermé, **caractérisé en ce que** le couvercle (3, 103) est pressé, lorsqu'une carte est insérée, par les contacts de lecture du bloc de contacts (4), vers le haut contre une surface renflée (45) de l'ouverture de palier (25).

13. Lecteur de microcarte selon la revendication 12, **caractérisé en ce que** la surface supérieure renflée (45) a un contour qui permet une insertion partielle dans le contour, de sorte que la région de contact (361) se trouve adjacente à la surface supérieure renflée (45).
